# DEMANDE DE BREVET EUROPEEN

(11) **EP 4 343 805 A1**
(43) Date de publication de la demande: **27.03.2024**
(21) Numéro de dépôt: 23198124.2
(22) Date de dépôt: 19.09.2023
(51) Int. Cl.: H01H 31/12, H01H 85/02, H02B 1/18, H01H 9/02

(54) **MODULE DE PROTECTION POUR UNE ENTREE D'ALIMENTATION D'UN APPAREILLAGE ELECTRIQUE DE COUPURE DU TYPE SECTIONNEUR A FUSIBLE NH**

(30) Priorité: 22.09.2022 FR 2209638
(71) Demandeur: HAGER-ELECTRO SAS, 67210 Obernai (FR)
(72) Inventeur: BOJDA, Jocelyn, 67000 Strasbourg (FR); KIBLER, Arnaud, 67100 Strasbourg (FR); UEBERSCHLAG, Antoine, 67140 Bourgheim (FR); VIEGAS, Louis, 67310 Wasselonne (FR)
(74) Mandataire: Cabinet Nuss

(57) **Abrégé**

L'invention concerne un module de protection pour une entrée d'alimentation (1) comprenant :
- un boîtier (2) comprenant une première zone de protection (3) pour recevoir une portion conductrice et une deuxième zone de protection (5) pour recevoir une extrémité de connexion (1b), et comprenant une première paroi latérale (6) et une deuxième paroi latérale,
caractérisé en ce que :
la première paroi latérale (6) comprend une première portion détachable (8) située dans la première zone de protection (3) et une première portion fixe (9) située dans la deuxième zone de protection (5),
la deuxième paroi latérale comprend une deuxième portion détachable située dans la première zone de protection (3) et une deuxième portion fixe située dans la deuxième zone de protection (5),
la première portion détachable (8) et la deuxième portion détachable étant configurées chacune pour être détachées du boîtier (2) dans une position détachée par sectionnement des premiers et deuxièmes moyens de liaison sécables (12).

## Description

La présente invention concerne le domaine des modules de protection pour une entrée d'alimentation d'un appareillage électrique de coupure du type sectionneur à fusible NH, ainsi que le domaine des appareillages électriques de coupure du type sectionneur à fusible NH.

Pour protéger une entrée d'alimentation d'un appareillage électrique de coupure du type sectionneur à fusible NH, il est connu de recouvrir l'entrée d'alimentation par un boîtier pour assurer la sécurité de l'opérateur avec un indice de protection IP2X. Les parois latérales du boîtier sont pleines à proximité de l'entrée d'alimentation et comportent en dehors des ouvertures pour garantir la ventilation.

Lorsqu'un dispositif de mesure du courant, tel qu'un capteur de mesure de courant est placé autour de l'entrée d'alimentation, la forme des boîtiers prévus habituellement ne convient plus et doit être adaptée pour permettre de recevoir le dispositif de mesure du courant.

A cet effet, on connaît par exemple un boîtier avec des ouvertures sur toute la surface des parois latérales du boîtier. Or, ce boîtier n'est pas compatible, lorsqu'aucun dispositif de mesure du courant n'est monté, car du fait de la présence des ouvertures, la sécurité de l'opérateur avec un indice de protection IP2X ne peut plus être garantie. Il en résulte qu'il est nécessaire de prévoir plusieurs types de modules de protection selon si oui ou non le dispositif de mesure de courant est présent, ce qui n'est pas satisfaisant.

La présente invention a pour but de pallier au moins l'un de ces inconvénients et de proposer une solution de module de protection qui garantit la sécurité de l'utilisateur en présence ou en l'absence d'un dispositif de mesure du courant.

A cet effet, l'invention concerne un module de protection pour une entrée d'alimentation d'un appareillage électrique de coupure du type sectionneur à fusible NH, le module de protection comprenant :
un boîtier comprenant au moins une première zone de protection configurée pour recevoir une portion conductrice de ladite entrée d'alimentation et le cas échéant au moins en partie un dispositif de mesure du courant et une deuxième zone de protection configurée pour recevoir une extrémité de connexion de ladite entrée d'alimentation, le boîtier comprenant au moins une première paroi latérale et une deuxième paroi latérale parallèles entre elles,
ledit module de protection est caractérisé en ce que :
   la première paroi latérale comprend au moins une première portion détachable située dans la première zone de protection et au moins une première portion fixe située dans la deuxième zone de protection,
   la deuxième paroi latérale comprend au moins une deuxième portion détachable située dans la première zone de protection et au moins une deuxième portion fixe située dans la deuxième zone de protection,
   la première portion détachable étant reliée mécaniquement au moins à la première portion fixe par des premiers moyens de liaison sécables et la deuxième portion détachable étant reliée mécaniquement au moins à la deuxième portion fixe par des deuxièmes moyens de liaison sécables dans une position attachée des première et deuxième portions détachables,
   la première portion détachable et la deuxième portion détachable étant configurées chacune pour être disposées sensiblement en regard d'un côté de la portion conductrice dans la position attachée,
   la première portion détachable et la deuxième portion détachable étant configurées chacune pour être détachées du boîtier dans une position détachée par sectionnement des premiers et deuxièmes moyens de liaison sécables.

L'invention concerne également un ensemble comprenant au moins un module de protection et un dispositif de mesure du courant caractérisé en ce que le module de protection est selon l'invention.

L'invention concerne également un appareillage électrique de coupure du type sectionneur à fusible NH comprenant au moins :
une base,
un porte-fusible,
une entrée d'alimentation,
un module de protection,
ledit appareillage électrique de coupure du type sectionneur à fusible NH est caractérisé en ce que le module de protection est selon l'invention.

L'invention concerne également un appareillage électrique de coupure du type sectionneur à fusible NH comprenant au moins :
une base,
un porte-fusible,
une entrée d'alimentation,
un ensemble comprenant un module de protection et un dispositif de mesure du courant,
ledit appareillage électrique de coupure du type sectionneur à fusible NH est caractérisé en ce que ledit ensemble est selon l'invention.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente une vue en perspective d'un module de protection avec un crochet de fixation dans une position déployée selon l'invention et qui est monté sur une face arrière de l'appareillage électrique de coupure du type sectionneur à fusible NH selon l'invention ne comprenant pas de dispositif de mesure du courant monté sur une entrée d'alimentation,
[Fig. 2] la figure 2 représente une vue de côté de la figure 1,
[Fig. 3] la figure 3 représente une vue en coupe et de face de la figure 1,
[Fig. 4] la figure 4 représente une vue en perspective de la face arrière et de l'entrée d'alimentation de l'appareillage électrique de coupure du type sectionneur à fusible NH,
[Fig. 5] la figure 5 représente une vue en perspective de la face arrière et de l'entrée d'alimentation de l'appareillage électrique de coupure du type sectionneur à fusible NH autour de laquelle est monté le dispositif de mesure du courant,
[Fig. 6] la figure 6 représente une vue en perspective d'un boîtier du module de protection selon l'invention avec une première portion détachable et une deuxième portion détachable dans la position attachée,
[Fig. 7] la figure 7 représente une vue en perspective du boîtier du module de protection selon l'invention sans la première portion détachable et la deuxième portion détachable dans la position détachée,
[Fig. 8] la figure 8 représente une vue en perspective d'un couvercle du boîtier du module de protection selon l'invention,
[Fig. 9] la figure 9 représente une vue en perspective du module de protection selon l'invention représenté à la figure 7 et avec un crochet de fixation dans la position déployée, le module de protection étant monté sur la face arrière de l'appareillage électrique de coupure du type sectionneur à fusible NH selon l'invention comprenant le dispositif de mesure du courant monté autour de l'entrée d'alimentation,
[Fig. 10] la figure 10 représente une vue de côté de la figure 9,
[Fig. 11] la figure 11 représente une vue en coupe et de côté de la figure 9,
[Fig. 12] la figure 12 représente une vue en perspective du module de protection selon l'invention avec un crochet de fixation dans la position rétractée, le module de protection étant monté sur la face arrière de l'appareillage électrique de coupure du type sectionneur à fusible NH selon l'invention ne comprenant pas le dispositif de mesure du courant monté autour de l'entrée d'alimentation,
[Fig. 13] la figure 13 représente une vue en coupe et de face de la figure 12, et,
[Fig. 14] la figure 14 représente une vue en coupe et de face de la figure 12.

Un module de protection pour une entrée d'alimentation 1 d'un appareillage électrique de coupure du type sectionneur à fusible NH comprend :
un boîtier 2 comprenant au moins une première zone de protection 3 configurée pour recevoir une portion conductrice 1a de ladite entrée d'alimentation 1 et le cas échéant au moins en partie un dispositif de mesure du courant 4 et une deuxième zone de protection 5 configurée pour recevoir une extrémité de connexion 1b de ladite entrée d'alimentation 1,
le boîtier 2 comprenant au moins une première paroi latérale 6 et une deuxième paroi latérale 7 parallèles entre elles.

Conformément à l'invention, ledit module de protection est caractérisé en ce que :
la première paroi latérale 6 comprend au moins une première portion détachable 8 située dans la première zone de protection 3 et au moins une première portion fixe 9 située dans la deuxième zone de protection 5,
la deuxième paroi latérale 7 comprend au moins une deuxième portion détachable 10 située dans la première zone de protection 3 et au moins une deuxième portion fixe 11 située dans la deuxième zone de protection 5,
la première portion détachable 8 étant reliée mécaniquement au moins à la première portion fixe 9 par des premiers moyens de liaison sécables 12 et la deuxième portion détachable 10 étant reliée mécaniquement au moins à la deuxième portion fixe 11 par des deuxièmes moyens de liaison sécables 13 dans une position attachée P1 des première et deuxième portions détachables 8, 10,
la première portion détachable 8 et la deuxième portion détachable 10 étant configurées chacune pour être disposées sensiblement en regard d'un côté de la portion conductrice 1a dans la position attachée P1,
la première portion détachable 8 et la deuxième portion détachable 10 étant configurées chacune pour être détachées du boîtier 2 dans une position détachée P2 par sectionnement des premiers et deuxièmes moyens de liaison sécables 12,13.

Avantageusement, le module de protection selon l'invention permet d'éviter que l'opérateur ne touche l'entrée d'alimentation 1 de l'appareillage électrique de coupure du type sectionneur à fusible NH qui est un conducteur électrique, par exemple en cuivre.

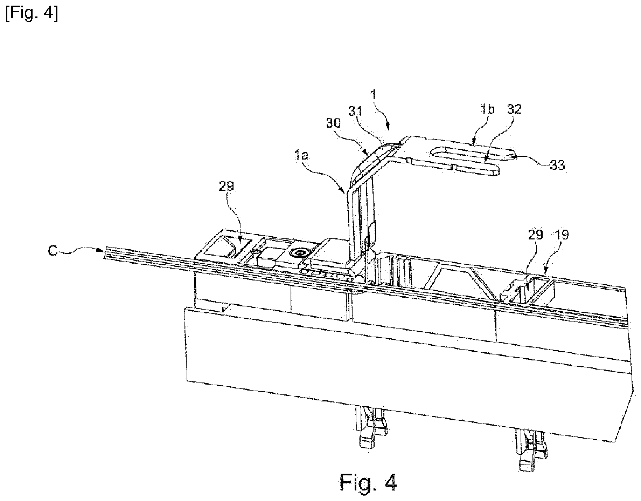

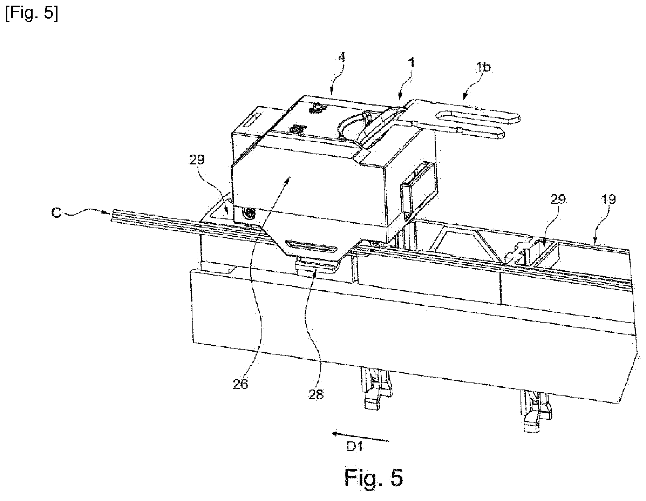

Plus particulièrement, et comme l'illustre notamment la figure 4, l'appareillage électrique de coupure du type sectionneur à fusible NH comprend une entrée d'alimentation 1 qui comporte une portion conductrice 1a qui se termine par une extrémité de connexion 1b. La portion conductrice 1a est configurée pour être entourée le cas échéant par le dispositif de mesure du courant 4, comme le montre la figure 5. L'extrémité de connexion 1b est configurée pour être raccordée à une barre de connexion omnibus (non représentée). De préférence, l'extrémité de connexion 1b présente une forme de fourche.

La première paroi latérale 6 et le deuxième paroi latérale 7 font partie des deux grands côtés du boîtier 2. En effet, de préférence le boîtier 2 présente une forme sensiblement rectangulaire avec quatre côtés dont deux grands côtés parallèles entre eux et deux petits côtés parallèles entre eux. Les quatre côtés sont tous reliés à une face supérieure qui est perpendiculaire.

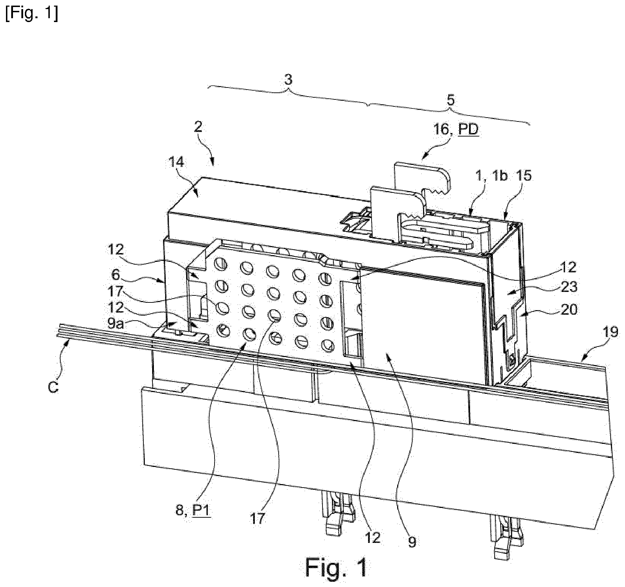

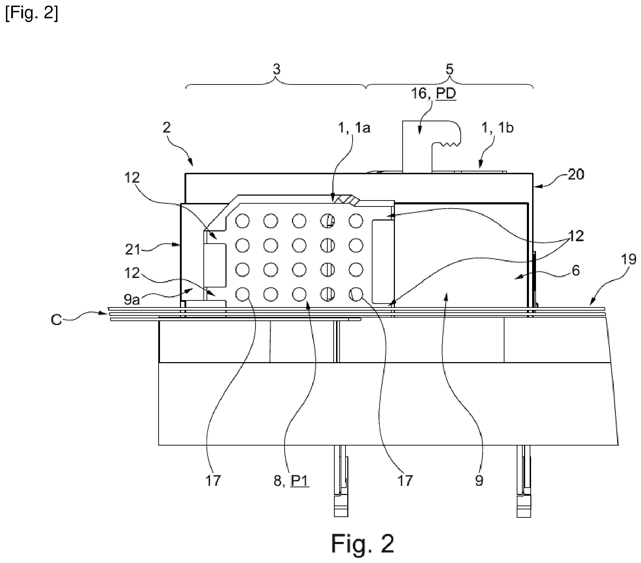

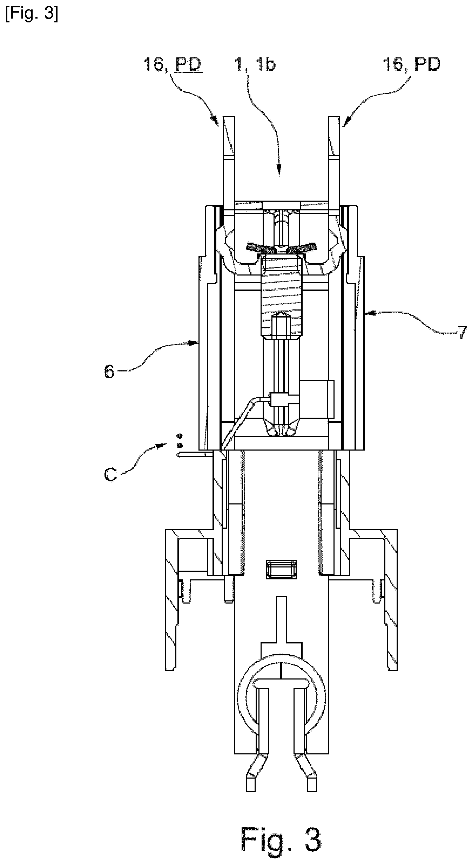

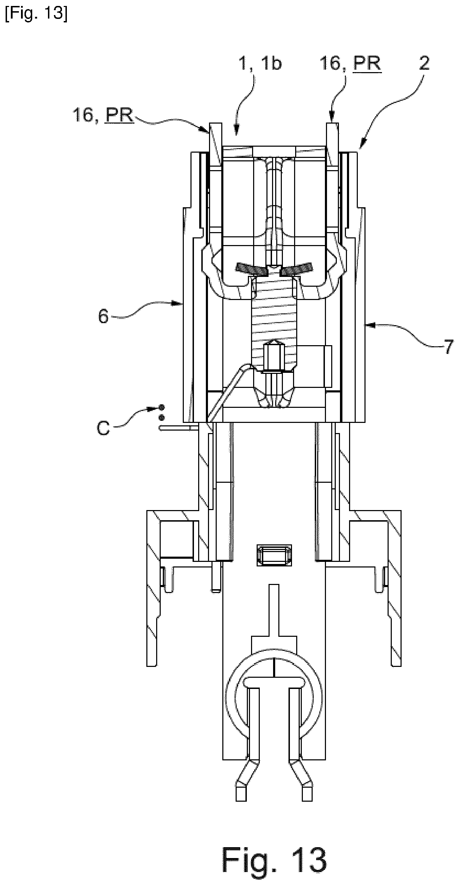

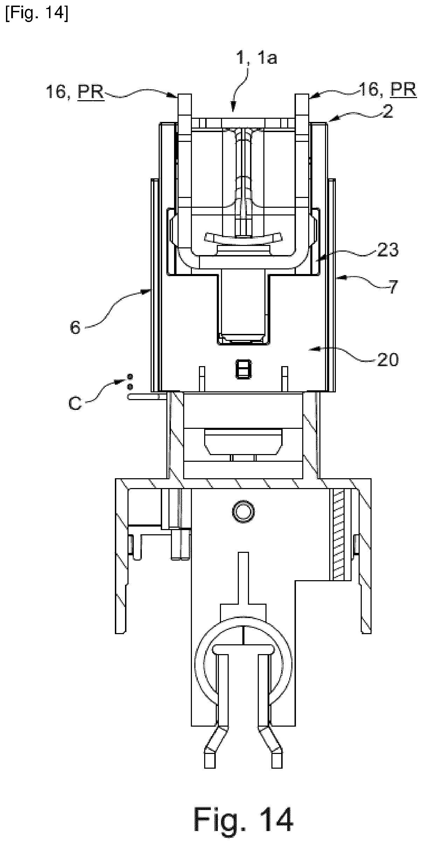

Grâce aux première et deuxième portions détachables 8, 10, l'utilisateur ne peut pas toucher la portion conductrice 1a si le dispositif de mesure du courant 4 n'est pas présent comme l'illustrent les figures 1 à 3 et 12 à 14. Autrement dit, les première et deuxième portions détachables 8, 10 dans la position attachée P1 sont configurées pour empêcher d'accéder à la portion conductrice 1a par les deux grands côtés du boîtier 2, si le dispositif de mesure du courant 4 n'est pas présent.

Les première et deuxième portions détachables 8, 10 sont configurées pour être détachables du boîtier 2 et au moins détachables relativement respectivement aux première et deuxième portions fixes 9, 11, grâce aux premiers et deuxièmes moyens de liaison sécables 12,13.

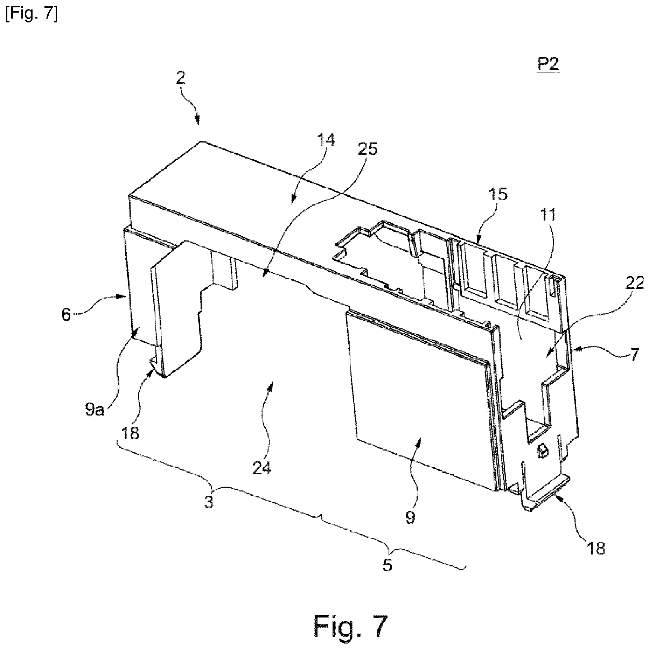

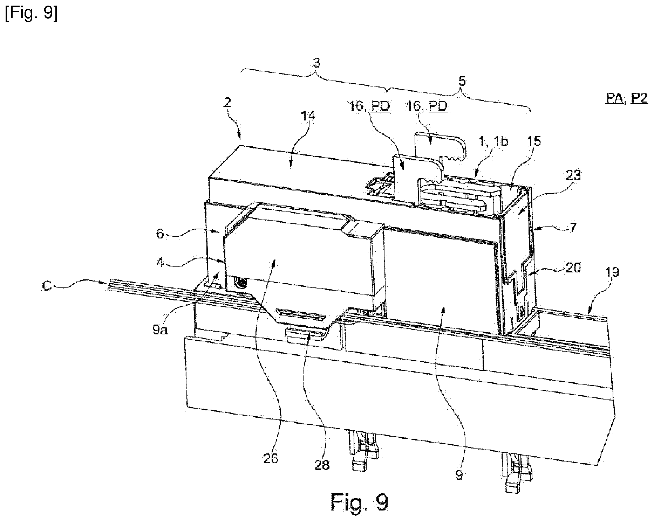

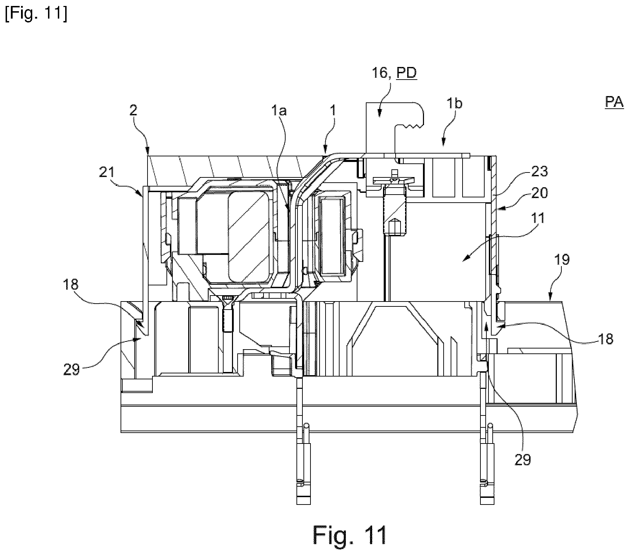

Si le dispositif de mesure de courant 4 est présent au niveau de l'entrée d'alimentation 1 et entoure ainsi au moins en partie la portion conductrice 1a comme l'illustre la figure 5, alors les première et deuxième portions détachables 8, 10 peuvent être détachées comme l'illustre la figure 7 dans la position détachée P2 pour permettre de recevoir le dispositif de mesure de courant 4 au niveau de la première zone de protection 3, comme le montrent les figures 9 à 11.

Dans les deux cas, c'est-à-dire en l'absence ou en présence du dispositif de mesure du courant 4, grâce aux première et deuxième portions fixes 9, 11, l'utilisateur ne peut pas toucher l'extrémité de connexion 1b par les deux grands côtés du boîtier 2, comme l'illustrent les figures 1 à 3 et 9 à 14. Autrement dit, les première et deuxième portions fixes 9, 11 sont configurées pour empêcher d'accéder à l'extrémité de connexion 1b par les deux grands côtés du boîtier 2.

Avantageusement, cette disposition selon l'invention implique qu'il n'est pas nécessaire de disposer d'un dispositif de mesure du courant 4 pour garantir une protection à l'utilisateur notamment du fait que les première et deuxième portions détachables 8, 10 ne doivent être détachées par sectionnement des premiers et deuxièmes moyens de liaison sécables 12,13 seulement si un dispositif de mesure du courant 4 est présent. Les première et deuxième portions détachables 8, 10 sont agencées pour être disposées sensiblement en regard des côtés de la portion conductrice 1a de sorte à former une barrière de protection dans la position attachée P1.

Il résulte de cette configuration avantageuse selon l'invention que le module de protection permet de garantir la sécurité de l'utilisateur en présence ou en l'absence d'un dispositif de mesure du courant 4 en empêchant notamment l'accès à l'entrée d'alimentation 1 par les deux grands côtés du boîtier 2.

De préférence et comme l'illustrent les figures 1, 2, 6 et 12, la première paroi latérale 6 comprend la première portion détachable 8 située dans la première zone de protection 3, la première portion fixe 9 située dans la deuxième zone de protection 5 et une troisième portion fixe 9a qui est située dans la première zone de protection 3. La première portion détachable 8 est reliée mécaniquement à la première portion fixe 9 et à la troisième portion fixe 9a par les premiers moyens de liaison sécables 12. La deuxième paroi latérale 7 comprend la deuxième portion détachable 10 située dans la première zone de protection 3, la deuxième portion fixe 11 située dans la deuxième zone de protection 5 et une quatrième portion fixe qui est située dans la première zone de protection 3. La deuxième portion détachable 10 est reliée mécaniquement à la deuxième portion fixe 11 et à la quatrième portion fixe par les deuxièmes moyens de liaison sécables 13. Dans cette configuration, la première portion détachable 8 est située entre la première portion fixe 9 et la troisième portion fixe 9a. La deuxième portion détachable 10 est située entre la deuxième portion fixe 11 et la quatrième portion fixe.

La troisième portion fixe 9a et la quatrième portion fixe contribuent également à empêcher de donner accès à la portion conductrice 1a par les deux grands côtés du boîtier 2.

De préférence et comme l'illustrent les figures 1, 2, 6 et 12, la première paroi latérale 6 comporte au moins un amincissement de matière formant les premiers moyens de liaison sécables 12 qui relie la première portion détachable 8 à la première portion fixe 9 et à la troisième portion fixe 9a et la deuxième paroi latérale 7 comporte au moins un amincissement de matière formant les deuxièmes moyens de liaison sécables 13 qui relie la deuxième portion détachable 10 à la deuxième portion fixe 11 et à la quatrième portion fixe.

Dans l'exemple non limitatif illustré, les premiers moyens de liaison 12 comportent quatre amincissements en forme de pattes ou de languettes et les deuxièmes moyens de liaison 13 comportent quatre amincissements en forme de pattes ou de languettes.

De préférence, le boîtier 2 comprend une troisième paroi latérale 20 et une quatrième paroi latérale 21 parallèles entre elles et qui relient la première paroi latérale 6 et la deuxième paroi latérale 7 entre elles.

La troisième paroi latérale 20 et la quatrième paroi latérale 21 font partie des deux petits côtés du boîtier 2.

La troisième paroi latérale 20 est disposée dans la deuxième zone de protection 5 et la quatrième paroi latérale 21 est disposée dans la première zone de protection 3.

La troisième paroi latérale 20 contribue à empêcher de donner l'accès à l'extrémité de connexion 1b par un des petits côtés du boîtier 2.

La quatrième paroi latérale 21 contribue à empêcher l'accès à la portion conductrice 1a par un autre des petits côtés du boîtier 2.

De préférence et comme l'illustrent les figures 1 à 3, le boîtier 2 comprend une paroi arrière 14 disposée entre la première paroi latérale 6 et la deuxième paroi latérale 7. Ladite paroi arrière 14 comprend une première ouverture 15 disposée dans la deuxième zone de protection 5. Ladite première ouverture 15 est configurée pour former un passage vers ladite extrémité de connexion 1b et le module de protection comprend au moins un crochet de fixation 16 lequel est saillant de ladite première ouverture 15 dans une position déployée PD du crochet de fixation 16.

La paroi arrière 14 fait partie de la face supérieure du boîtier 2.

La paroi arrière 14 empêche de donner l'accès à la portion conductrice 1a par la face supérieure du boîtier 2.

La première ouverture 15 donne au contraire accès à l'extrémité de connexion 1b.

Cette configuration permet une fixation de l'appareillage électrique de coupure muni du module de protection selon l'invention par accrochage dudit au moins un crochet de fixation 16 à la barre de connexion omnibus afin de faciliter l'installation. Ainsi, l'installateur n'a pas besoin de maintenir manuellement l'appareillage électrique de coupure lors du vissage de l'extrémité de connexion 1b de l'entrée d'alimentation 1 avec la barre de connexion omnibus.

De préférence, le module de protection comprend deux crochets de fixation 16 parallèles entre eux.

Ledit au moins un crochet de fixation 16 est de préférence en métal.

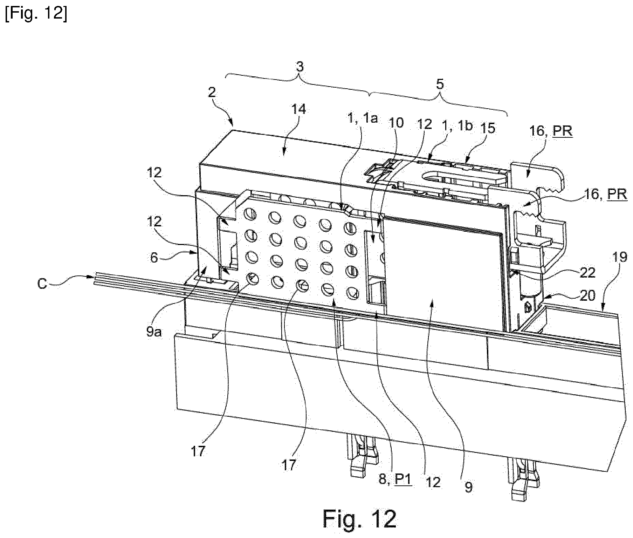

De préférence et comme l'illustrent les figures 12 à 14, le boîtier 2 comprend la troisième paroi latérale 20 et la quatrième paroi latérale 21 parallèles entre elles et qui relient la première paroi latérale 6 et la deuxième paroi latérale 7 entre elles, la troisième paroi latérale 20 est disposée dans la deuxième zone de protection 5 et le crochet de fixation 16 est saillant de la troisième paroi latérale 20 par une deuxième ouverture 22 dans une position rétractée PR du crochet de fixation 16.

Cette configuration permet de ranger ledit au moins un crochet de fixation 16 et de proposer une configuration compacte du boîtier 2, lorsque ledit au moins un crochet de fixation 16 est dans la position rétractée PR.

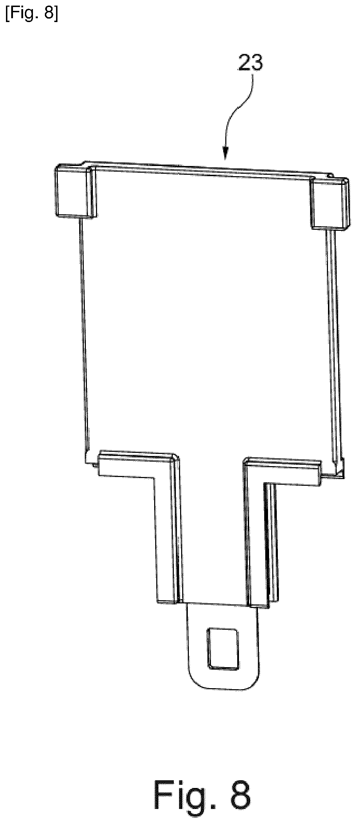

Préférentiellement et comme le montrent les figures 1 à 3, 8 à 11, le module de protection comprend un couvercle 23 amovible de la troisième paroi latérale 20 et qui est configuré pour fermer ladite deuxième ouverture 22 dans la position déployée PD du crochet de fixation 16.

Avantageusement, le couvercle 23 permet de garantir une protection de l'utilisateur avec un indice IP2X par un des deux petits côtés du boîtier 2 qui est dans la deuxième zone de protection 5 si ledit crochet de fixation 16 est dans la position déployée PD.

De préférence, la paroi arrière 14 est disposée entre la première paroi latérale 6 et la deuxième paroi latérale 7 en étant sensiblement perpendiculaire à celle-ci. De préférence, la première ouverture 15 est agencée pour que l'extrémité de connexion 1b affleure la paroi arrière 14.

De préférence et comme l'illustrent les figures 1, 2, 6 et 12, la première portion détachable 8 et la deuxième portion détachable 10 comprennent chacune une pluralité d'orifices 17 d'aération.

Avantageusement, les orifices 17 permettent une ventilation de la chaleur dissipée par l'entrée d'alimentation 1 si un courant électrique circule tout en garantissant la sécurité de l'utilisateur.

Les orifices 17 sont de préférence de forme circulaire, mais cette forme n'est pas limitative. De préférence et selon un exemple non limitatif, le diamètre des orifices 17 est compris entre 3 millimètres et 7 millimètres. De cette façon, il est possible de garantir une protection de l'utilisateur avec un indice de protection au moins IP2X.

De préférence et comme l'illustrent les figures 1, 2, 6, 7, 9, 10, 12, la première portion fixe 9 et la deuxième portion fixe 11 sont des parois pleines.

Avantageusement, les parois pleines permettent d'empêcher de donner accès à l'extrémité de connexion 1b par les grands côtés du boîtier 2.

De préférence et comme l'illustrent les figures 1, 2, 6, 7, 9, 10, 12, la troisième portion fixe 9a et la quatrième portion fixe 11 sont des parois pleines.

Avantageusement, les parois pleines permettent d'empêcher de donner accès à la portion conductrice 1a par les grands côtés du boîtier 2.

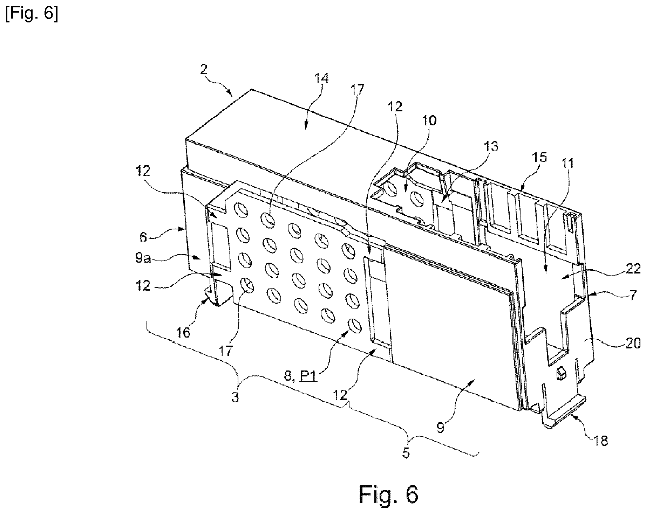

De préférence et comme l'illustrent les figures 6, 7 et 11, le module de protection comprend au moins un organe de fixation 18 configuré pour permettre la fixation dudit boîtier 2 à une face arrière 19 de l'appareillage électrique de coupure.

Dans l'exemple illustré dans les figures, le module de protection comprend préférentiellement deux organes de fixation 18 sous la forme de clips.

Dans ce cas, les deux organes de fixation 18 sont de préférence saillants respectivement de la troisième paroi latérale 20 et la quatrième paroi latérale 21.

De préférence, le boîtier 2 est en un matériau de type plastique, polymère ou similaire.

L'invention concerne également un ensemble comprenant au moins un module de protection et un dispositif de mesure du courant 4 caractérisé en ce que le module de protection est selon l'invention et tel que décrit précédemment.

Cet ensemble peut se présenter avantageusement sous la forme d'un kit ou sous une forme assemblée décrite ci-après.

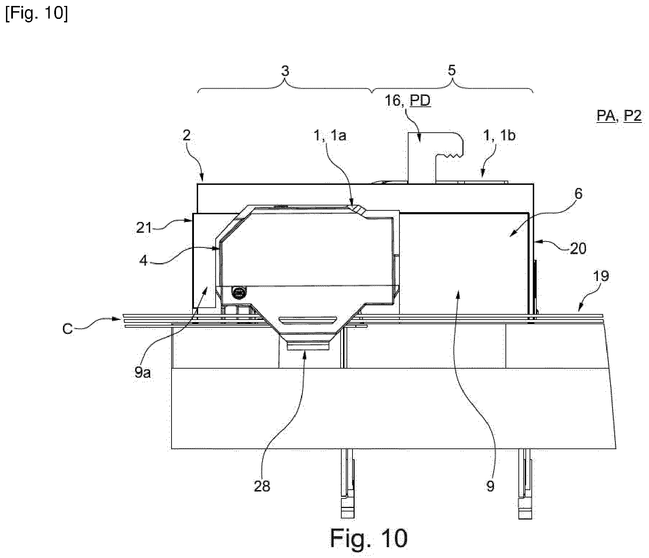

De préférence, dans une position d'assemblage PA dudit ensemble illustré aux figures 9 et 10, la première portion détachable 8 et la deuxième portion détachable 10 sont détachées dans la position détachée P2 de sorte à former respectivement une première fenêtre 24 et une deuxième fenêtre 25 (figure 7) et le dispositif de mesure du courant 4 est logé dans la première zone de réception 3 de manière à fermer les première et deuxième fenêtres 24, 25.

De préférence, le dispositif de mesure du courant 4 comprend une première face latérale 26 et une deuxième face latérale 27 et dans la position d'assemblage PA dudit ensemble, la première fenêtre 24 est fermée par la première face latérale 26 et la deuxième fenêtre 25 est fermée par la deuxième face latérale 27.

Dans cette configuration, la première face latérale 26 et la deuxième fenêtre 25 sont configurées pour contribuer à empêcher de donner accès à l'entrée d'alimentation 1.

De préférence et comme le montrent les figures 5, 9 et 10, le dispositif de mesure du courant 4 comprend des moyens de fixation 28 configurés pour permettre la fixation dudit dispositif de mesure du courant 4 à la face arrière 19 de l'appareillage électrique de coupure.

Cette configuration particulière confère au dispositif de mesure de courant 4 l'aptitude de tenir tout seul relativement à l'appareillage électrique de coupure. Lors de l'installation, on évite ainsi qu'il ne soit retiré ou qu'il ne chute de l'entrée d'alimentation 1 notamment si l'appareillage électrique de coupure est disposé à la verticale selon la direction D1 et on facilite par conséquent l'installation.

Le dispositif de mesure du courant 4 comprend de préférence un organe de passage de câble C qui permet de guider au moins un câble C vers un dispositif électronique relié au dispositif de mesure du courant 4 et qui est agencé pour collecter les mesures effectuées par le dispositif de mesure du courant 4.

De préférence, le dispositif de mesure du courant 4 est un capteur de courant par exemple un transformateur de courant.

L'invention concerne également un appareillage électrique de coupure du type sectionneur à fusible NH comprenant au moins :
une base (non représentée),
un porte-fusible (non représenté),
une entrée d'alimentation 1,
un module de protection,
ledit appareillage électrique de coupure du type sectionneur à fusible NH est caractérisé en ce que le module de protection est selon l'invention et tel que décrit précédemment.

L'invention concerne également un appareillage électrique de coupure du type sectionneur à fusible NH comprenant au moins :
une base,
un porte-fusible,
une entrée d'alimentation 1,
un ensemble comprenant un module de protection et un dispositif de mesure du courant 4,
ledit appareillage électrique de coupure du type sectionneur à fusible NH est caractérisé en ce que ledit ensemble est selon l'invention et tel que décrit précédemment.

Comme le montre notamment la figure 4, l'entrée d'alimentation 1 est saillante de la face arrière 19 de l'appareillage électrique de coupure.

Le module de protection associé à l'appareillage électrique de coupure selon l'invention permet avantageusement de recouvrir au moins en partie l'entrée d'alimentation 1 pour garantir la sécurité de l'utilisateur comme expliqué précédemment.

De préférence, la face arrière 19 comprend au moins une zone de fixation 29 dudit module de protection complémentaire avec ledit au moins un organe de fixation 18 du module de protection. La fixation peut se faire par clippage.

De préférence, l'entrée d'alimentation 1 présente une forme générale d'équerre à angle droit intégrant une zone biseautée 30 de préférence à 45 degrés qui sépare la portion conductrice 1a de l'extrémité de connexion 1b et sur laquelle une nervure de rigidification 31 est préférentiellement présente. L'extrémité libre de cette équerre qui correspond à l'extrémité de connexion 1b est configurée pour être en contact avec la barre de connexion omnibus et comprend de préférence un trou de connexion 32 de forme sensiblement oblongue par exemple avec un chanfrein d'entrée 33 permettant le passage de vis.

L'invention concerne également un procédé de montage du module de protection selon l'invention sur un appareillage électrique de coupure du type sectionneur à fusible NH selon l'invention.

Ce procédé de montage comprend au moins une étape de fixation du module de protection sur la face arrière 19 par ledit au moins un organe de fixation 18.

Si un dispositif de mesure du courant 4 doit être présent, le procédé de montage comprend en outre avant l'étape de fixation du module de protection, une étape de montage du dispositif de mesure du courant 4, lors de laquelle le dispositif de mesure du courant 4 est monté sur l'entrée d'alimentation 1. Plus précisément le dispositif de mesure du courant 4 est coulissé sur l'entrée d'alimentation 1 par l'extrémité de connexion 1b jusqu'à être traversé par la portion conductrice 1a.

De préférence, le procédé de montage comprend en outre, une étape de fixation du dispositif de mesure du courant 4, lors de laquelle le dispositif de mesure du courant 4 est fixé par les moyens de fixation 28 à la face arrière 19.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Module de protection pour une entrée d'alimentation (1) d'un appareillage électrique de coupure du type sectionneur à fusible NH, le module de protection comprenant :
- un boîtier (2) comprenant au moins une première zone de protection (3) configurée pour recevoir une portion conductrice (1a) de ladite entrée d'alimentation (1) et le cas échéant au moins en partie un dispositif de mesure du courant (4) et une deuxième zone de protection (5) configurée pour recevoir une extrémité de connexion (1b) de ladite entrée d'alimentation (1), le boîtier (2) comprenant au moins une première paroi latérale (6) et une deuxième paroi latérale (7) parallèles entre elles,
ledit module de protection est **caractérisé en ce que** :
la première paroi latérale (6) comprend au moins une première portion détachable (8) située dans la première zone de protection (3) et au moins une première portion fixe (9) située dans la deuxième zone de protection (5),
la deuxième paroi latérale (7) comprend au moins une deuxième portion détachable (10) située dans la première zone de protection (3) et au moins une deuxième portion fixe (11) située dans la deuxième zone de protection (5),
la première portion détachable (8) étant reliée mécaniquement au moins à la première portion fixe (9) par des premiers moyens de liaison sécables (12) et la deuxième portion détachable (10) étant reliée mécaniquement au moins à la deuxième portion fixe (11) par des deuxièmes moyens de liaison sécables (13) dans une position attachée (P1) des première et deuxième portions détachables (8, 10),
la première portion détachable (8) et la deuxième portion détachable (10) étant configurées chacune pour être disposées sensiblement en regard d'un côté de la portion conductrice (1a) dans la position attachée (P1),
la première portion détachable (8) et la deuxième portion détachable (10) étant configurées chacune pour être détachées du boîtier (2) dans une position détachée (P2) par sectionnement des premiers et deuxièmes moyens de liaison sécables (12,13).

2. Module de protection selon la revendication 1, **caractérisé en ce que** le boîtier (2) comprend une paroi arrière (14) disposée entre la première paroi latérale (6) et la deuxième paroi latérale (7), ladite paroi arrière (14) comprenant une première ouverture (15) disposée dans la deuxième zone de protection (5), ladite première ouverture (15) étant configurée pour former un passage vers ladite extrémité de connexion (1b) et **en ce que** le module de protection comprend au moins un crochet de fixation (16) lequel est saillant de ladite première ouverture (15) dans une position déployée (PD) du crochet de fixation (16).

3. Module de protection selon la revendication 2, **caractérisé en ce que** le boîtier (2) comprend une troisième paroi latérale (20) et une quatrième paroi latérale (21) parallèles entre elles et qui relient la première paroi latérale (6) et la deuxième paroi latérale (7) entre elles, la troisième paroi latérale (20) est disposée dans la deuxième zone de protection (5) et le crochet de fixation (16) est saillant de la troisième paroi latérale (20) par une deuxième ouverture (22) dans une position rétractée (PR) du crochet de fixation (16).

4. Module de protection selon la revendication 2, **caractérisé en ce qu'**il comprend un couvercle (23) amovible de la troisième paroi latérale (20) et qui est configuré pour fermer ladite deuxième ouverture (22) dans la position déployée (PD) du crochet de fixation (16).

5. Module de protection selon l'une quelconque des revendication 1 à 4, **caractérisé en ce que** la première portion détachable (8) et la deuxième portion détachable (10) comprennent chacune une pluralité d'orifices (17) d'aération.

6. Module de protection selon l'une quelconque des revendication 1 à 5, **caractérisé en ce que** la première portion fixe (9) et la deuxième portion fixe (11) sont des parois pleines.

7. Module de protection selon l'une quelconque des revendications 1 à 6, **caractérisé en ce qu'**il comprend au moins un organe de fixation (18) configuré pour permettre la fixation dudit boîtier (2) à une face arrière (19) de l'appareillage électrique de coupure.

8. Ensemble comprenant au moins un module de protection et un dispositif de mesure du courant (4) **caractérisé en ce que** le module de protection est selon l'une quelconque des revendications 1 à 7.

9. Ensemble selon la revendication 8, **caractérisé en ce que** dans une position d'assemblage (PA) dudit ensemble, la première portion détachable (8) et la deuxième portion détachable (10) sont détachées dans la position détachée (P2) de sorte à former respectivement une première fenêtre (24) et une deuxième fenêtre (25) et **en ce que** le dispositif de mesure du courant (4) est logé dans la première zone de réception (3) de manière à fermer les première et deuxième fenêtres (24, 25).

10. Ensemble selon la revendication 9, **caractérisé en ce que** le dispositif de mesure du courant (4) comprend une première face latérale (26) et une deuxième face latérale (27) et **en ce que** dans la position d'assemblage (PA) dudit ensemble, la première fenêtre (24) est fermée par la première face latérale (26) et la deuxième fenêtre (25) est fermée par la deuxième face latérale (27).

11. Ensemble selon l'une quelconque des revendications 8 à 10, **caractérisé en ce que** le dispositif de mesure du courant (4) comprend des moyens de fixation (28) configurés pour permettre la fixation dudit dispositif de mesure du courant (4) à la face arrière (19) de l'appareillage électrique de coupure.

12. Appareillage électrique de coupure du type sectionneur à fusible NH comprenant au moins :
- une base,
- un porte-fusible,
- une entrée d'alimentation (1),
- un module de protection,
ledit appareillage électrique de coupure du type sectionneur à fusible NH est **caractérisé en ce que** le module de protection est selon l'une quelconque des revendications 1 à 7.

13. Appareillage électrique de coupure du type sectionneur à fusible NH comprenant au moins :
- une base,
- un porte-fusible,
- une entrée d'alimentation (1),
- un ensemble comprenant un module de protection et un dispositif de mesure du courant (4),
ledit appareillage électrique de coupure du type sectionneur à fusible NH est **caractérisé en ce que** ledit ensemble est selon l'une quelconque des revendications 8 à 11.
